# EUROPÄISCHE PATENTSCHRIFT

(11) **EP 0 610 202 B1**
(45) Veröffentlichungstag und Bekanntmachung des Hinweises auf die Patenterteilung: **21.05.1997**
(21) Anmeldenummer: 92910731.6
(22) Anmeldetag: 04.06.1992
(51) Int. Cl.: H04L 12/40

(54) **VERFAHREN ZUR INFORMATIONSÜBERTRAGUNG IN EINEM MEHRERE TEILNEHMER AUFWEISENDEN BUSSYSTEM**
PROCESS FOR INFORMATION TRANSMISSION IN A BUS SYSTEM HAVING SEVERAL PARTICIPANTS
PROCEDE DE TRANSMISSION D'INFORMATIONS DANS UN SYSTEME DE BUS A PARTICIPANTS MULTIPLES

(30) Priorität: 04.07.1991 DE 4122084
(43) Veröffentlichungstag der Anmeldung: 17.08.1994
(73) Patentinhaber: ROBERT BOSCH GMBH, 70442 Stuttgart (DE)
(72) Erfinder: PRZYBYLA, Bernd, D-7141 Schwieberdingen (DE); PISCHKE, Juergen, D-7251 Weissach (DE); ZARYCHTA, Janina-Ursula, D-7250 Leonberg (DE)
(86) Internationale Anmeldenummer: DE9200456
(87) Internationale Veröffentlichungsnummer: WO9301668

(56) Entgegenhaltungen:
- EP-A- 0 341 166
- WO-A-82/04366
- RADIO FERNSEHEN ELEKTRONIK. Bd. 38, Nr. 6, 1989, BERLIN DE Seiten 386 - 389; F. EFFENBERGER: 'Serieller Bus zur Kopplung intelligenter Messysteme'

## Beschreibung

### Stand der Technik

Die Erfindung betrifft ein Verfahren zur Informationsübertragung nach der Gattung des Hauptanspruchs. Es ist schon ein Verfahren zur asynchronen Informationsübertragung in einem mehrere Teilnehmer aufweisenden Bussystem aus der EP-A-0 341 166 bekannt. Bei diesem Bussystem überwacht jeder Teilnehmer den Bus auf Belegung bzw. Nichtbelegung, bevor er eine Information absendet. Zu Beginn einer Absendung einer Information wird ein Start-Zeichen gesendet. Am Ende der Übertragung einer Information wird ein Ende-Zeichen gesendet. Vor Absendung einer Information wartet jeder Teilnehmer eine Bus-Überwachungszeit ab. Während dieser Zeit wird sichergestellt, daß der Teilnehmer nicht mit seiner Absendung beginnt, wenn gerade ein Zeichen von einem anderen Teilnehmer auf den Bus übertragen wird.

Aus der WO-A-82 04366 ist ein Verfahren zur asynchronen, seriellen Informationsübertragung in einem seriellen Bussystem bekannt. Dabei enthält jeder Teilnehmer einen Schaltkreis, der eine Informationsübertragung für diesen Teilnehmer für eine bestimmte Zeitdauer verhindert, wenn eine besondere Unterbrechungsnachricht eintrifft. Während einer Informationsübertragung vergleicht der Sender der Information die von ihm ausgesendeten Signale mit den Signalen auf dem Bus. Stellt er Abweichungen fest, erzeugt der Sender die Unterbrechungs-Nachricht. Für jeden Teilnehmer startet dann eine willkürliche Wartezeit, während derer er nicht auf den Bus zugreifen darf.

Aus dem Bericht von F. Effenberger: "Serieller Bus zur Kopplung intelligenter Meßsysteme", Radio Fernsehen Elektronik, Volume 38, Nr. 6, 1989, S. 386 bis 389 ist ein serielles Bussystem bekannt, bei dem jeder sendewillige Teilnehmer grundsätzlich nur auf den unbesetzten Bus zugreift. Zur Busbelegungserkennung wird darin vorgeschlagen, daß eine Teilnehmerstation das Empfangsdatenregister eines UART-Bausteins zu Beginn und Ende eines Zeitfensters ausliest. Wurde in das Empfangsdatenregister während des Zeitintervalls ein Zeichen eingetragen, so wird der Bus als belegt erkannt. Diese Lösungsmöglichkeit gestattet einen rein über die Software organisierten Test des Buszustandes auf eine laufende Datenübertragung. Dabei tritt jedoch das Problem auf, daß die Zeit, in der ein Buszugriff durch eine andere Einheit innerhalb dieses Zeitintervalls nicht mehr erkannt wird annähernd in der Größe der Zeit für die Übertragung eines Zeichens liegt. Zur Behebung dieses Problems wird vorgeschlagen, einen zusätzlichen Schaltkreis mit Flip-Flops vorzusehen. Damit soll es möglich sein, daß eine sendewillige Einheit auch ohne vorhergehenden Test des Buszustandes mit einem Übertragungsversuch beginnen kann.

### Vorteile der Erfindung

Das erfindungsgemäße Verfahren mit den im Hauptanspruch genannten Merkmalen hat demgegenüber den Vorteil, daß eine schnelle Busbelegungserkennung bei einer sendewilligen Teilnehmerstation auch ohne zusätzliche Bauteile wie Flip-Flops möglich wird. Weiterhin vorteilhaft ist, daß die Busbelegungserkennung ohne zusätzliche Rechenbelastung des Rechners der Teilnehmerstation auskommt.

Durch die in den Unteransprüchen aufgeführten Maßnahmen sind vorteilhafte Weiterbildungen und Verbesserungen des im Hauptanspruch angegebenen Verfahrens möglich. So ist es besonders vorteilhaft, daß der logische Zustand des seriellen Busses zusätzlich abgefragt wird, wenn nach der Bus-Überwachungszeit der Bus als frei erkannt wird, und daß der serielle Bus dann als frei erkannt wird, wenn als Abfrageergebnis ein Ruhezustand "Logisch 1" auf der Busleitung erkannt wird und daß der Bus als belegt erkannt wird, wenn als Abfrageergebnis ein aktiver Zustand "Logisch 0" auf der Busleitung erkannt wird. Dadurch kann die Zeit, während derer ein Teilnehmer auf den Bus zugreifen kann, ohne daß dies von einer sendewilligen Station erkannt würde, auf eine Zeit, die im Bereich der Zeit für wenige Assembler-Befehle liegt, reduziert werden.

Aufgrund der seriellen Bearbeitung bei einem seriellen Bussystem ist es nicht zu vermeiden, daß bei jedem Teilnehmer zwischen dem Erkennen von "Bus frei" und dem Aussenden des ersten Bytes einer Information eine Zeitverzögerung auftritt. Innerhalb dieser Zeitverzögerung kann es jedoch zu einer Kollision zweier Teilnehmer kommen und zwar dann, wenn ein Teilnehmer bereits sendet und der andere Teilnehmer innerhalb der Zeitverzögerung seine Sendung aufnimmt. Um den beschriebenen Kollisionsfall lösen zu können, ist es vorteilhaft, daß jeder Teilnehmer das Aussenden seiner Information durch "Mithören" überwacht, wobei bei einer gleichzeitigen Aussendung von verschiedenen Informationen (Kollision) mindestens zweier Teilnehmer eine gegenseitige Beeinflussung der Informationen stattfindet, die durch das "Mithören" erkannt wird. Mithin kann durch das "Mithören" jeder Teilnehmer erkennen, ob er allein eine Information dem Bus zugeleitet hat oder ob ein Kollisionsfall eingetreten ist.

Tritt eine Kollision auf, die durch das "Mithören" der Kollisions-Teilnehmer erkannt wird, so ist vorzugsweise vorgesehen, daß die kollidierenden Teilnehmer ihre Sendung abbrechen und erst nach unterschiedlich langen Wartezeiten wieder den Versuch unternehmen, Zugriff zum Bus zu erhalten, um ihre jeweiligen Informationen aussenden zu können. Vorzugsweise ist dazu vorgesehen, daß die Länge der genannten Wartezeiten mittels eines Zufallsgenerators bestimmt werden.

Für ein Steuergerät, daß als Teilnehmerstation in einem seriellen Netzwerk eingesetzt werden soll, ist es vorteilhaft, daß die serielle Schnittstelle des Steuergerätes so ausgebildet ist, daß sie nach Empfang einer Information eine Flagge setzt, um dem Rechner der Station den Empfang einer Information mitzuteilen, daß sie während der Bus-Überwachungszeit den seriellen Bus mit einer so hohen Abtastrate abtastet, daß sie den Empfang einer Information schon während des Empfangs des Start-Bits erkennt, daß das Steuergerät Mittel enthält, die nach Ablauf der Bus-Überwachungszeit den Zustand der Flagge abfragen, die angibt ob eine Information empfangen wurde oder nicht und daß die serielle Schnittstelle die Information nur dann auf den seriellen Bus absendet, wenn die Flagge während der Bus-Überwachungszeit nicht gesetzt wurde. Dadurch kann das Steuergerät auf einfache Art und Weise eine Busbelegungserkennung durchführen, wobei kein zusätzlicher Schaltungsaufwand im Steuergerät entsteht.

Weiterhin vorteilhaft ist, daß das Steuergerät Mittel enthält, die den logischen Zustand der Busleitung zusätzlich abfragen, wenn nach Ablauf der Bus-Überwachungszeit die Flagge nicht gesetzt war, daß das Steuergerät den seriellen Bus als frei erkennt, wenn das Abfrageergebnis einen Ruhezustand "Logisch 1" ergibt und daß das Steuergerät den Bus als belegt erkennt, wenn das Abfrageergebnis einen aktiven Zustand "Logisch 0" ergibt. Hierdurch wird das kritische Zeitintervall, bei dem immer noch eine Kollision zwischen gleichzeitig sendenden Teilnehmern des Netzwerkes auftreten kann, weiter reduziert.

Weiterhin vorteilhaft ist, daß das Steuergerät Mittel enthält, die die Bus-Überwachungszeit mindestens so groß wie die Summe einer Byte-Zeit und einer Interbyte-Zeit wählen, wobei die Byte-Zeit die Dauer für eine Übertragung eines Bytes der aus mindestens einem Byte bestehenden Information und die Interbyte-Zeit die maximale, zwischen zwei Bytes einer Information verstreichende Zeit ist. Dadurch wird eine ausreichend lange Bus-Überwachungszeit gewährleistet.

Weiterhin vorteilhaft ist, daß das Steuergerät Mittel zur Erkennung einer Kollision von Informationen auf dem anschließbaren seriellen Bus enthält. Dadurch wird es möglich, die Übertragungssicherheit auf dem seriellen Bus zu erhöhen.

### Zeichnung

Die Erfindung wird im folgenden anhand der Figuren näher erläutert. Es zeigen:
- Figur 1: ein Zeitdiagramm hinsichtlich einer Informationsübertragung zweier Teilnehmer (ECU 1, ECU 2) eines Bussystems,
- Figur 2: ein entsprechendes Zeitdiagramm, das einen Kollisionsfall der beiden Teilnehmer verdeutlicht,
- Figur 3: eine Prinzipschaltung zum Auffinden eines Startbits einer Information,
- Figur 4: eine der Figur 3 entsprechende Darstellung nach einem anderen Ausführungsbeispiel,
- Figur 5: eine der Figur 3 entsprechende Darstellung nach einem letzten Ausführungsbeispiel und
- Figur 6: ein Blockschaltbild eines seriellen Bus-systems.

### Beschreibung von Ausführungsbeispielen

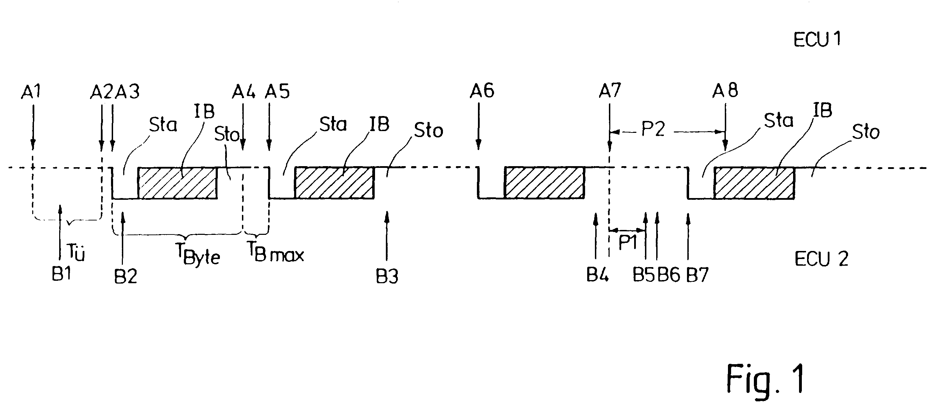

Anhand der Figur 1 soll eine Informationsübertragung auf einem mehrere Teilnehmer, nämlich die Teilnehmer ECU 1 und ECU 2, umfassenden seriellen Bussystem näher erläutern. Es sei davon ausgegangen, daß die Teilnehmer ECU 1 und ECU 2 die gleiche Übertragungsgeschwindigkeit, zum Beispiel 10,4 kBD aufweisen.

Das Diagramm der Figur 1 verdeutlicht den auf dem Bus vorliegenden Zustand, wobei ein Ruhezustand mit logisch "1" und ein aktiver Zustand mit logisch "0" dargestellt ist. Es ist vorgesehen, daß die beiden Teilnehmer ECU 1 und ECU 2 eine Uberwachung des Busses auf Übergänge vom Ruhezustand "1" in den aktiven Zustand "0" überwachen, sobald sie von einem nicht dargestellten Zentralsystem zur Abgabe von Informationen aufgefordert werden. Diese Überwachung erfolgt mindestens für die Dauer einer Bus-Überwachungszeit T_{Ü}. Die Bus-Überwachungszeit T_{Ü} setzt sich aus zwei Zeiträumen, und zwar aus einer Byte-Zeit T_{Byte} und einer Interbyte-Zeit T_{Bmax} zusammen. Dabei stellt die Byte-Zeit T_{Byte} die Dauer eines Bytes der aus mindestens einem Byte bestehenden Information dar, die von einem der Teilnehmer ECU 1, ECU 2 abgegeben wird. Die Interbyte-Zeit T_{Bmax} stellt die maximale, zwischen zwei Bytes einer Information verstreichende Zeit dar. Beispielsweise kann ein von einem Teilnehmer ECU 1 oder ECU 2 abgegebenes Telegramm fünf Bytes umfassen, wobei jedem Byte am Anfang ein Startbit Sta und am Ende ein Stopbit Sto zugeordnet ist.

Gemäß Figur 1 sei angenommen, daß der Teilnehmer ECU 1 zum Zeitpunkt Al mit der Überwachung des Busses auf dessen Zustand beginnt. Dies bedeutet, daß er zuvor zur Abgabe einer Information von dem bereits genannten Zentralsystem aufgefordert wurde. Zum Zeitpunkt A2 überprüft der Teilnehmer ECU 1, ob während der Zeit Al - A2 ein Startbit aufgetreten ist; da dies nicht vorhanden ist, hat er zu diesem Zeitpunkt den Bus als frei erkannt. Zum Zeitpunkt A3 sendet der Teilnehmer ECU 1 das erste Byte der Information aus; dies beginnt mit einem Startbit Sta. Dem Startbit Sta folgen Informationsbits IB. Am Ende des ersten Bytes (Zeitpunkt A4) nimmt der Bus wieder den Zustand "1" an. Das Byte endet mit einem Stopbit Sto. Der Zeitraum zwischen dem Zeitpunkt A3 und A4 entspricht der bereits genannten Byte-Zeit T_{Byte}.

Zum Zeitpunkt A5 wird von dem Teilnehmer ECU 1 das zweite Byte der Information gestartet. Es wiederholt sich der bereits zuvor beschriebene Vorgang. Es sei angenommen, daß zum Zeitpunkt A6 das letzte Byte der Information vom Teilnehmer ECU 1 gestartet wird, so daß zum Zeitpunkt A7 die Informationsabgabe des Teilnehmers ECU 1 beendet ist.

Die Figur 1 zeigt ferner das Verhalten eines zweiten Teilnehmers ECU 2 des Bussystems. Dieser beginnt zum Zeitpunkt B1 mit der Überwachung des Busses. Auch er soll also -aufgefordert vom Zentralsystem- eine Information abgeben. Da es sich hier um einen seriellen Bus handelt, sind Kollisionen der Nachrichten der Teilnehmer 1 und 2 zu vermeiden. Zum Zeitpunkt B2, das heißt also, nach Ablauf der den Teilnehmern zugeordneten Bus-Überwachungszeit T_{Ü}, detektiert der zweite Teilnehmer ECU 2 das Startbit Sta des Teilnehmers ECU 1. Dies führt dazu, daß der Teilnehmer ECU 2 den Vorgang abbricht, also nicht mit der Informationsübertragung seiner Daten beginnt.

Er verbleibt jedoch in seinem Überwachungszustand, das heißt, er prüft -ebenso wie alle weiteren möglicherweise noch an den Bus angeschlossenen Teilnehmer- ob der Bus belegt ist. Insofern wird er zum Zeitpunkt B3 das zweite Byte des Teilnehmers ECU 1 detektieren. Zum Zeitpunkt B4 detektiert der Teilnehmer ECU 2 auf entsprechende Weise das letzte Byte des Teilnehmers ECU 1. Zum Zeitpunkt B5 erkennt der Teilnehmer ECU 2 das Ende der Information des Teilnehmers ECU 1. Insofern kann er zum Zeitpunkt B6 nochmals mit der Überwachung des Busses beginnen. Da er innerhalb der sich anschließenden Bus-Überwachungszeit T_{Ü} keine Informationsübertragung auf dem Bus detektiert, startet er zum Zeitpunkt B7 das erste Byte seiner Information.

Um sicherzustellen, daß keine Kollision der Informationsabgaben der beiden Teilnehmer ECU 1 und ECU 2 erfolgt, überwacht ECU 2 den Zustand des Busses nach jedem von dem Teilnehmer ECU 1 abgesandten Byte. Ist die Zeit nach einem Byte größer als die Summe der Interbyte-Zeit T_{Bmax} und der Byte-Zeit T_{Byte}, ohne daß er ein weiteres Byte auf dem Bus von dem Teilnehmer ECU 1 empfangen hat, so kann er mit der Informationsübertragung beginnen. Hierzu wartet er zumindest die Zeit P2 ab. Es ist sichergestellt, daß dann der Bus tatsächlich frei ist und der jeweilige Teilnehmer nicht etwa in eine Pause eines laufenden Telegramms eines anderen Teilnehmers hineinsendet.

Die einzelnen von einem Teilnehmer ECU 1 beziehungsweise ECU 2 gesendeten Bytes eines Telegramms werden jeweils nach Ablauf der Interbyte-Zeit T_{B} ohne eine weitere Busprüfung gesendet. Der Teilnehmer ECU 2, der -wie zuvor beschrieben- kurz nach dem Teilnehmer ECU 1 ebenfalls sendebereit ist, erkennt aufgrund des Null-Eins-Übergangs die Belegung des Busses. Da die Baudrate auf dem Bus bekannt ist, können -wie bereits erwähnt- vom Teilnehmer ECU 2 die folgenden Bytes der Nachricht des Teilnehmers ECU 1 mitgelesen werden; sie müssen jedoch nicht interpretiert werden, das heißt, es ist keine Kenntnis des Telegramminhalts notwendig. Vielmehr entscheidet der Teilnehmer ECU 2 aufgrund des Ablaufs der Summe der beiden Zeiträume, nämlich der Byte-Zeit T_{Byte} und der Interbyte-Zeit T_{Bmax}, daß beim Auftreten eines derart langen Zeitraumes der Bus nunmehr frei ist und daher er selbst mit dem Senden beginnen kann.

Die Erfindung ist selbstverständlich nicht auf die beiden Teilnehmer ECU 1 und ECU 2 begrenzt, sondern kann entsprechend auch bei mehr als zwei Teilnehmer angewendet werden.

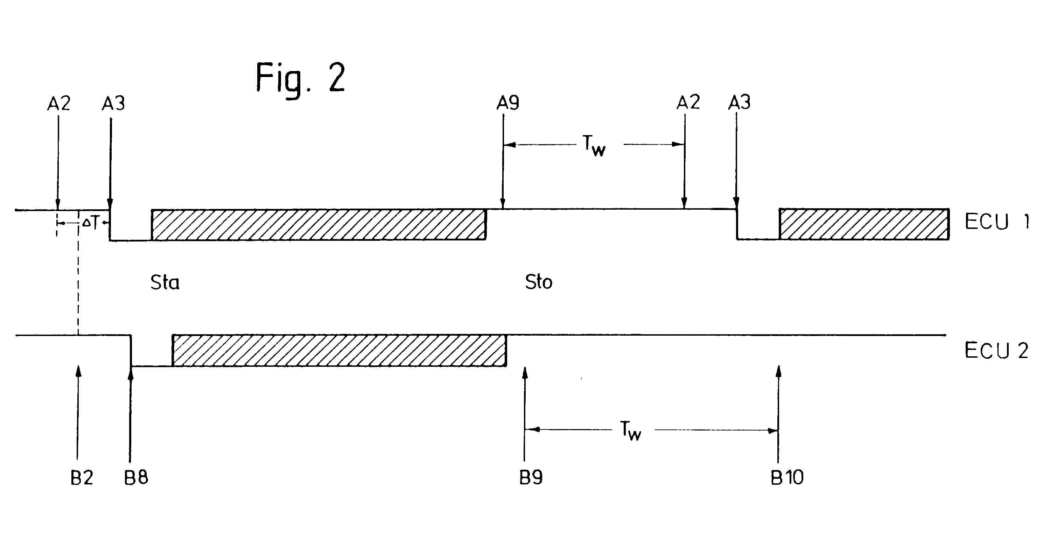

Die Figur 2 zeigt, daß zwischen dem Erkennen von "Bus frei" (Zeitpunkt A2 des Teilnehmers ECU 1) und dem Aussenden eines Bytes (Zeitpunkt A3) eine Zeitverzögerung ΔT auftritt, da der zugehörige Mikroprozessor nur seriell arbeiten kann. In dieser Zeitlücke (Zeitverzögerung ΔT) kann nun ein anderer Teilnehmer (zum Beispiel ECU 2) der ebenfalls "Bus frei" (Zeitpunkt B2) erkannt hat, ein Byte aussenden (Zeitpunkt B8), so daß es zu einer Kollision auf dem Bus kommt. Diese Zeitlücke liegt jedoch in einer Größenordnung, die nur wenige Assembler-Befehle ausmacht. Nimmt man jeden Zeitpunkt, zu dem die verschiedenen Teilnehmer senden wollen als gleich wahrscheinlich an, so ergibt sich die Wahrscheinlichkeit für das Auftreten einer Kollision als Quotient aus der Dauer der Zeitlücke (Zeitverzögerung Δ T) und dem Abstand zwischen den Startbits zweier gesendeter Bytes. Dieser Abstand ist die Summe aus der Zeitdauer für ein Byte (Byte-Zeit T_{Byte}) und der kleinstmöglichen Interbyte-Zeit (T_{Bmin}). Beispielsweise kann in einer typischen Anwendung eine Zeitverzögerung von Δ T = 4 µs, T_{Byte} = 0,96 ms (10,4 kBd, 10 Bit) und T_{Bmin} = 5 ms vorgesehen sein. Dies gibt eine Kollisionswahrscheinlichkeit von 0,07%, das heißt, in einem von 1.428 Fällen wird es zu einer Kollision kommen.

Da sich die Informationen der beiden gleichzeitig sendenden Teilnehmer gegenseitig beeinflussen, kann durch Mithören der eigenen Botschaft jeweils dieser Kollisionsfall von den Teilnehmern ECU 1 beziehungsweise ECU 2 erkannt werden. Alle beteiligten Teilnehmer brechen dann ihr Telegramm zu den Zeitpunkten A9 beziehungsweise B9 (Figur 2) ab und ziehen sich vom Bus zurück. Der Empfänger, für den das Telegramm gedacht war, hat aufgrund der gegenseitigen Beeinflussung ein verstümmeltes Telegramm empfangen; er erkennt dies als Fehlerfall. Es ist nun sicherzustellen, daß bei einer Wiederholung der Telegrammabgabe nicht der gleiche Fall erneut auftritt. Hierzu ist vorgesehen, daß jeder Teilnehmer ECU 1 und ECU 2 eine Wartezeit T_{W} vorgeschrieben bekommt, wobei die Wartezeiten T_{W} der einzelnen Teilnehmer ECU 1, ECU 2 unterschiedlich lang sind.

Aus der Figur 2 ist ersichtlich, daß die Wartezeit T_{W} des Teilnehmers ECU 1 kürzer als die Wartezeit T_{W} des Teilnehmers ECU 2 ist, das heißt, der Teilnehmer ECU 1 beginnt als erster nach dem Abbruch (Zeitpunkt A9) mit einer Wiederholung der Abgabe seiner Information. Der Teilnehmer ECU 2, der eine längere Wartezeit T_{W} vorgeschrieben bekommen hat, wartet bis zum Zeitpunkt B10, um einen neuen Start zu versuchen, wobei er zum Zeitpunkt B10 detektiert, daß der Bus belegt ist. Er wird daher die Übermittlung der gesamten Informationen des Teilnehmers ECU 1 abwarten und erst dann mit seiner Informationsübertragung beginnen.

Vorzugsweise ist vorgesehen, daß die Wartezeiten T_{W} der einzelnen Teilnehmer ECU 1, ECU 2 nicht konstant sind, sondern daß die von einem internen Zufallsgenerator vorgeschlagen werden. Startparameter kann eine interne Uhrzeit (Timerstand eines ständig laufenden Timers) oder auch die eindeutige Teilnehmeradresse und/oder die Anzahl von bisherigen Kollisionen sein.

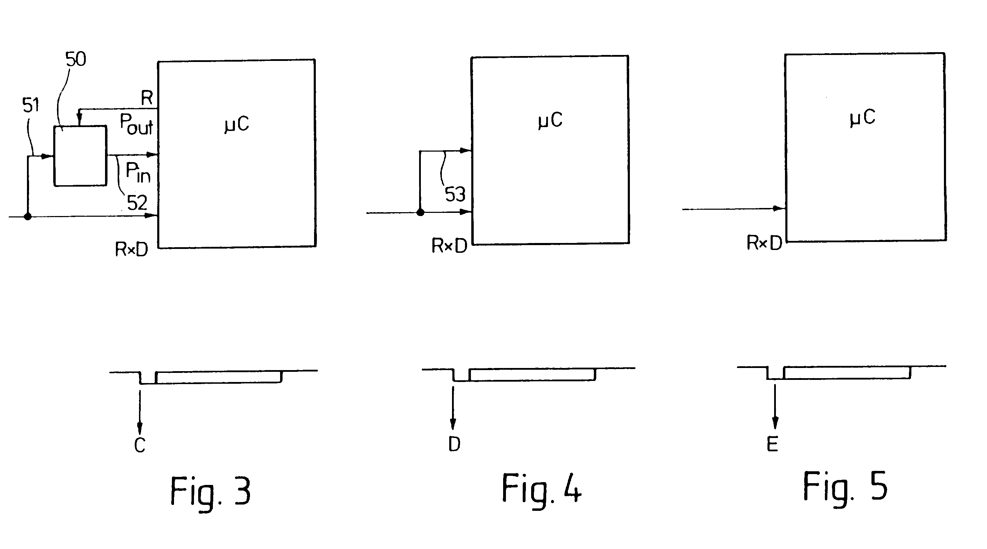

Für das Erkennen eines Startbits Sta auf dem Bus sind in den Figuren 3 bis 5 verschiedene Möglichkeiten aufgezeigt. Ziel ist es jeweils, die Rechnerbelastung eines Mikrocontroller µC des Zentralsystems möglichst gering zu halten. Eine Busabtastung scheidet aus, da die sichere Erkennung eines Startbits eine schnellere Zeit als die Zeit für ein Bit erfordert, was eine erhebliche Rechnerbelastung zur Folge hätte.

Vorzugsweise ist daher gemäß Figur 3 vorgesehen, daß eine Speicherung der Information mittels eines Flip-Flops 50 erfolgt. Der Eingang 51 des Flip-Flops 50 ist ebenso wie der Eingang RxD des Mikrocontrollers µC an den Bus angeschlossen. Der Ausgang 52 des Flip-Flops 50 ist an einen Eingang Pᵢₙ des Mikrocontrollers µC angeschlossen. Ein Resetausgang R des Mikrocontroller µC führt zum Flip-Flop 50. Mithin wird das Flip-Flop 50 von der seriellen Empfangsleitung angesteuert, wobei dem Rechner ein Port zum Auslesen und ein Port zum Resetieren zur Verfügung steht. Der Zeitpunkt C in dem Diagramm der Figur 3 kennzeichnet das Erkennen eines Startbits Sta.

Entsprechendes ist in der Figur 4 wiedergegeben, wobei das Erkennen des Startbits Sta mit D gekennzeichnet ist. Im Gegensatz zum Ausführungsbeispiel der Figur 3 ist ein Flip-Flop intern im Mikrocontroller µC untergebracht. Dies ist einem externen Interrupteingang 53 nachgeschaltet.

Die Figur 5 zeigt eine weitere Lösung zum Erkennen eines Startbits, wobei das Startbit jedoch gemäß dem Diagramm mit Verzögerung erkannt wird. Der Kennungszeitpunkt ist mit E gekennzeichnet.

Die Lösung der Figur 3 verlangt keinen zusätzlichen Hardwareaufwand. Voraussetzung ist jedoch, daß der Rechner mit einer seriellen Schnittstelle mit umschaltbarer Baudrate zur Verfügung steht mit der Möglichkeit, auch Informationen ohne Stopbit zu erkennen. Während der Phase der Busüberwachung wird die Baudrate auf einen möglichst hohen Wert (zum Beispiel 187,5 kBd) geschaltet. Sendet nun ein Teilnehmer (zum Beispiel ECU 1) ein Byte mit zum Beispiel 10,4 kBd, so synchronisiert sich der Empfänger ECU 2 auf das Startbit und meldet nach 9,5 Bitzeiten (auf die hohe Baudrate bezogen) den Empfang des Bytes. Der Inhalt ist nicht relevant; er wird zum Beispiel aus einem Startbit, 8 Informationsbits und einem Stopbit bestehen. Nunmehr ist vorgesehen, daß der Teilnehmer ECU 2 eine Flagge setzt. Vergleicht man die Lösung gemäß Figur 5 mit der Lösung der Figur 3, so entspricht das Setzen der Flagge dem Setzen des Flip-Flops. Der Teilnehmer ECU 2 fragt nunmehr diese Flagge ab, bevor er ein eigenes Byte aussendet. Solange die Flagge gesetzt ist, wird der Bus als belegt erkannt. Ist die Flagge nicht gesetzt, so wird zusätzlich die Busleitung abgefragt: Befindet sie sich in dem Zustand logisch "1", so ist der Bus frei; weist der Buszustand den Wert logisch "0" auf, so liegt gerade eine Informationsübertragung vor. Diese hat jedoch gerade erst begonnen; die 9,5 Bitzeiten sind noch nicht abgelaufen, so daß die Flagge noch nicht gesetzt ist.

Das erfindungsgemäße Verfahren hat im Gegensatz zu dem Prioritätsverfahren des Standes der Technik den Vorteil, daß eine Festlegung der Sendereihenfolge nicht notwendig ist. Das erfindungsgemäße Verfahren ist kostengünstiger gegenüber dem Verfahren des Standes der Technik; es werden keine speziellen Vorrichtungen benötigt. Der Einsatz eines einfachen Flip-Flops ist ausreichend. Die Verwendung eines gewöhnlichen seriellen Eingangs und die Umschaltung auf eine hohe Baudrate bieten die Möglichkeit, ohne jeglichen Zusatzaufwand auszukommen.

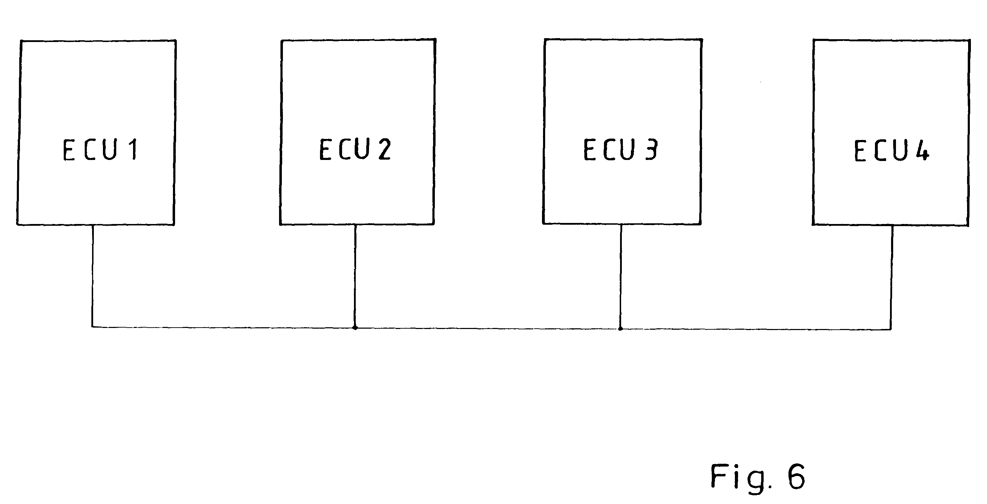

Die Figur 6 zeigt das Blockschaltbild eines seriellen Bussystems, das beispielsweise vier Teilnehmer ECU 1 bis ECU 4 aufweist. Bei diesen Teilnehmer kann es sich beispielsweise um Steuergeräte für zu steuernde Vorgänge, insbesondere bei Motoren und/oder Schalteinrichtungen in Kraftfahrzeugen handeln. Jedes Steuergerät ist mit einer Steuerschaltung versehen, die die Informationsübertragung gemäß dem erfindungsgemäßen Verfahren durchführt.

## Patentansprüche

1. Verfahren zur seriellen Informationsübertragung zwischen mindestens zwei Teilnehmern eines seriellen Bussystems, wobei die serielle Informationsübertragung mit einer für alle Teilnehmer einheitlichen Sendeübertragungsrate durchgeführt wird, wobei jede Informationsübertragung mit einem Start-Bit begonnen wird, wobei von jedem Teilnehmer vor Absendung einer Information eine Bus-Überwachungszeit abgewartet wird, dadurch gekennzeichnet, daß von jedem Teilnehmer (ECU1 bis ECU4) nach Empfang einer Information eine Flagge gesetzt wird, die den Empfang einer Information anzeigt, daß der logische Zustand des seriellen Busses von jedem Teilnehmer (ECU1 bis ECU4) während seiner Bus-Überwachungszeit (T_{Ü}) mit einer so hohen Abtastrate abgetastet wird, daß eine Information schon während des Empfangs des Start-Bits (Sta) erkannt wird, welches mit der definierten Sendeübertragungsrate abgesendet wurde, daß von jedem Teilnehmer (ECU1 bis ECU4) nach Ablauf der Bus-Überwachungszeit (T_{Ü}) der Zustand der Flagge abgefragt wird, daß die Information von einem Teilnehmer (ECU1 bis ECU4) nur dann gesendet wird, wenn die Flagge während der Bus-Überwachungszeit (T_{Ü}) nicht gesetzt wurde.

2. Verfahren nach Anspruch 1, dadurch gekennzeichnet, daß der logische Zustand des seriellen Busses zusätzlich abgefragt wird, wenn die Flagge nicht gesetzt war und daß der serielle Bus dann als frei erkannt wird, wenn als Abfrageergebnis ein Ruhezustand "Logisch 1" auf der Busleitung erkannt wird und daß der Bus als belegt erkannt wird, wenn als Abfrageergebnis ein aktiver Zustand "Logisch 0" auf der Busleitung erkannt wird.

3. Verfahren nach Anspruch 1 oder 2, dadurch gekennzeichnet, daß von jedem Teilnehmer (ECU1 bis ECU4) das Aussenden seiner Information durch "Mithören" überwacht wird, wobei bei einer gleichzeitigen Aussendung von verschiedenen Informationen mindestens zweier Teilnehmer (ECU1 bis ECU4) eine gegenseitige Beeinflussung der Informationen stattfindet, die durch das Mithören erkannt wird.

4. Verfahren nach Anspruch 3, dadurch gekennzeichnet, daß die beiden gleichzeitig sendenden Teilnehmer (ECU1 bis ECU4) aufgrund der durch "Mithören" erkannten Kollision ihre jeweilige Sendung abbrechen und erst nach unterschiedlich langen Wartezeiten (T_{W}) wieder den Versuch des Zugriffs zum Bus unternehmen.

5. Verfahren nach Ansprch 4, dadurch gekennzeichnet, daß die Länge der Wartezeiten (T_{W}) mittels eines Zufallsgenerators und/oder in Abhängigkeit der Steuergeräteadresse und/oder in Abhängigkeit der Anzahl der bisherigen Kollisionen bestimmt werden.

6. Steuergerät, insbesondere Kraftfahrzeug-Steuergerät, mit einem Mikrorechner, mit einer seriellen Schnittstelle, die an einen seriellen Bus anschließbar ist, über den Informationen nach einem Verfahren nach einem der vorhergehenden Ansprüche übermittelbar sind, wobei die serielle Schnittstelle Mittel zur Einstellung einer definierten Sendeübertragungsrate aufweist, wobei sie derart ausgestaltet ist, daß sie jede Informationsübertragung mit einem Start-Bit beginnt und vor Absendung einer Information eine Bus-Überwachungszeit abwartet, dadurch gekennzeichnet, daß die serielle Schnittstelle weiter so ausgestaltet ist, daß sie nach Empfang einer Information eine Flagge setzt, um dem Steuergerät (ECU1 bis ECU4) den Empfang einer Information anzuzeigen, daß sie Mittel enthält, die den seriellen Bus während der Bus-Überwachungszeit (T_{Ü}) mit einer so hohen Abtastrate abtasten, daß sie den Empfang einer Information schon während des Empfangs des Start-Bits (Sta) erkennt, welches mit der definierten Sendeübertragungsrate abgesendet wurde, daß das Steuergerät (ECU1 bis ECU4) Mittel enthält, die nach Ablauf der Bus-Überwachungszeit (T_{Ü}) den Zustand der Flagge abfragen, daß die serielle Schnittstelle so ausgebildet ist, daß sie die Information nur dann auf den seriellen Bus absendet, wenn die Flagge während der Bus-Überwachungszeit (T_{Ü}) nicht gesetzt wurde.

7. Steuergerät nach Anspruch 6, dadurch gekennzeichnet, daß der Mikrorechner (µC) so ausgebildet ist, daß er den logischen Zustand der Busleitung zusätzlich abfragt, wenn nach Ablauf der Bus-Überwachungszeit (T_{Ü}) die Flagge nicht gesetzt ist, daß das Steuergerät (ECU1 bis ECU4) Mittel enthält, die den seriellen Bus als frei erkennen, wenn das Abfrageergebnis einen Ruhezustand "Logisch 1" ergibt und den seriellen Bus als belegt erkennen, wenn das Abfrageergebnis einen aktiven Zustand "Logisch 0" ergibt.

8. Steuergerät nach Anspruch 6 oder 7, dadurch gekennzeichnet, daß es Mittel enthält, die die Bus-Überwachungszeit (T_{Ü}) mindestens so groß wie die Summe einer Byte-Zeit (T_{Byte}) und einer Interbyte-Zeit (T_{Bmax}) wählen, wobei die Byte-Zeit (T_{Byte}) die Dauer eines Bytes der aus mindestens einem Byte bestehenden Information und die Interbyte-Zeit (T_{Bmax}) die maximale, zwischen zwei Bytes einer Information verstreichende Zeit ist.

9. Steuergerät nach einem der Ansprüche 6 bis 8, dadurch gekennzeichnet, daß es Mittel zur Erkennung einer Kollision von Informationen auf dem anschließbaren seriellen Bus enthält.

## Claims

1. Process for serial information transmission between at least two participants in a serial bus system, the serial information transmission being carried out at a sending transmission rate which is the same for all the participants, each information transmission being commenced with a start bit, each participant waiting for a bus monitoring time before sending an item of information, characterized in that, after receiving an item of information, a flag which indicates the reception of an item of information is set by each participant (ECU1 to ECU4), in that the logical state of the serial bus is sampled by each participant (ECU1 to ECU4) during his bus monitoring time (T_{Ü}) at such a high sampling rate that an item of information is detected even while receiving the start bit (Sta), which was sent at the defined sending transmission rate, in that, after expiry of the bus monitoring time (T_{Ü}), the state of the flag is enquired by each participant (ECU1 to ECU4) and in that the item of information is sent by a participant (ECU1 to ECU4) only if the flag has not been set during the bus monitoring time (T_{Ü}).

2. Process according to Claim 1, characterized in that the logical state of the serial bus is additionally enquired if the flag was not set and in that the serial bus is detected as free if an idle state "logical 1" is detected on the bus line as the result of the enquiry and in that the bus is detected as busy if an active state "logical 0" is detected on the bus line as the result of the enquiry.

3. Process according to Claim 1 or 2, characterized in that each participant (ECU1 to ECU4) monitors the sending out of his information by "listening in", a reciprocal influencing of the information taking place, and being detected by the listening in, if different information is sent out simultaneously by at least two participants (ECU1 to ECU4).

4. Process according to Claim 3, characterized in that, on account of the collision detected by "listening in", the two simultaneously sending participants (ECU1 to ECU4) discontinue their respective sending and reattempt to access the bus only after waiting times (T_{W}) of different lengths.

5. Process according to Claim 4, characterized in that the length of the waiting times (T_{W}) is determined by means of a random generator and/or in dependence on the control device address and/or in dependence on the number of previous collisions.

6. Control device, in particular a motor-vehicle control device, having a microcomputer, having a serial interface, which can be connected to a serial bus via which information can be transmitted by a process according to one of the preceding claims, the serial interface having means for setting a defined sending transmission rate, it being designed such that it commences each information transmission with a start bit and waits for a bus monitoring time before sending an item of information, characterized in that the serial interface is further designed such that, after receiving an item of information, it sets a flag in order to indicate to the control device (ECU1 to ECU4) the reception of an item of information, in that it includes means which sample the serial bus during the bus monitoring time (T_{Ü}) at such a high sampling rate that it detects the reception of an item of information even while receiving the start bit (Sta), which was sent at the defined sending transmission rate, in that the control device (ECU1 to ECU4) includes means which, after expiry of the bus monitoring time (T_{Ü}) enquire the state of the flag, and in that the serial interface is designed such that it sends the item of information to the serial bus only if the flag has not been set during the bus monitoring time (T_{Ü}).

7. Control device according to Claim 6, characterized in that the microcomputer (µC) is designed such that it additionally enquires the logical state of the bus line if, after expiry of the bus monitoring time (T_{Ü}), the flag is not set, in that the control device (ECU1 to ECU4) includes means which detect the serial bus as free if the result of the enquiry gives an idle state "logical 1" and detect the serial bus as busy if the result of the enquiry gives an active state "logical 0".

8. Control device according to Claim 6 or 7, characterized in that it includes means which choose the bus monitoring time (T_{Ü}) to be at least as great as the sum of a byte time (T_{Byte}) and an interbyte time (T_{Bmax}), the byte time (T_{Byte}) being the duration of one byte of the information comprising at least one byte and the interbyte time (T_{Bmax}) being the maximum time elapsing between two bytes of an item of information.

9. Control device according to one of Claims 6 to 8, characterized in that it includes means for detecting a collision of information on the connectable serial bus.

## Revendications

1. Procédé de transmission d'informations série entre au moins deux participants à un système de bus série, la transmission des informations série étant effectuée avec une vitesse de transmission à l'émission unique pour tous les participants, chaque transmission d'informations commençant par un bit de départ, et avant l'émission d'une information, chaque participant attend pendant un temps de surveillance de bus,
caractérisé en ce qu'
à la réception d'une information, chaque participant (ECU 1 - ECU 4) met un drapeau qui indique la réception d'une information, l'état logique du bus série étant détecté par chaque participant (ECU 1 - ECU 4) pendant une durée de surveillance de bus (T_{U}), avec une vitesse de détection élevée,
- une information est reconnue dès la réception du bit de départ (Sta), information qui a été émise à une vitesse de transmission définie à l'émission,
- chaque participant (ECU 1 - ECU 4) est interrogé à la fin de la durée de surveillance de bus (T_{U}) sur l'état du drapeau,
- l'information n'est émise par un participant (ECU 1-ECU 4) que si le drapeau n'a pas été mis pendant la durée de surveillance de bus (T_{U}).

2. Procédé selon la revendication 1,
caractérisé en ce que
- on interroge l'état logique du bus série si le drapeau n'est pas mis,
- on reconnaît que le bus série est libre si, comme résultat de l'interrogation, on reconnaît sur la ligne de bus un état de repos correspondant à l'état logique « 1 », et l'on considère que le bus est occupé si, comme résultat de l'interrogation, on détecte un état actif correspondant à l'état logique « 0 » sur le bus.

3. Procédé selon les revendications 1 ou 2,
caractérisé en ce que
chaque participant (ECU 1 - ECU 4) surveille l'émission de son information en « écoutant » et en cas d'émission simultanée de différentes informations, au moins deux participants (ECU 1 - ECU 4) influencent réciproquement les informations, ce qui permet de reconnaître l'écoute.

4. Procédé selon la revendication 1,
caractérisé en ce que
les deux participants (ECU 1 - ECU 4) émettant simultanément, arrêtent leur émission respective lorsque par « l'écoute » ils ont reconnu la collision, et ce n'est qu'après des temps d'attente (T_{W}) de durées différentes, qu'ils effectuent de nouveau une tentative d'accès au bus.

5. Procédé selon la revendication 4,
caractérisé en ce qu'
on définit la longueur du temps d'attente (T_{W}) par un générateur aléatoire et/ou en fonction de l'adresse de l'appareil de commande et/ou en fonction du nombre de collisions produites jusqu'alors.

6. Appareil de commande, notamment appareil de commande d'un véhicule automobile, comprenant un microprocesseur, une interface série reliée à un bus série et qui transmet les informations pour la mise en oeuvre du procédé selon l'une des revendications précédentes, l'interface série comprenant des moyens pour régler une vitesse de transmission d'émission définie, en étant réalisée pour commencer chaque transmission d'informations par un bit de départ et pour attendre, avant d'émettre une information, une durée de surveillance de bus,
caractérisé en ce que
l'interface série est en outre réalisée pour qu'après la réception d'une information, elle mette à l'état un drapeau pour indiquer à l'appareil de commande (ECU 1 - ECU 4) la réception d'une information,
elle comprend des moyens qui détectent le bus série pendant la durée de surveillance de bus (T_{U}) à une vitesse de détection tellement élevée qu'ils reconnaissent la réception d'une information déjà pendant la réception du bit de démarrage (Sta) qui a été émis à la vitesse de transmission d'émetteur déterminée,
l'appareil de commande (ECU 1 - ECU 4) comporte des moyens qui, à la fin de la durée de surveillance de bus (T_{U}), interrogent l'état du drapeau,
l'interface série est réalisée pour n'émettre des informations sur le bus série que si le drapeau n'a pas été mis pendant la durée de surveillance de bus (T_{U}).

7. Appareil de commande selon la revendication 6,
caractérisé en ce que
le microprocesseur (µc) est réalisé pour interroger en outre l'état logique de la ligne de bus si, après la fin du temps de surveillance de bus (T_{U}), le drapeau n'a pas été mis,
l'appareil de commande (ECU 1 - ECU 4) comporte des moyens qui considèrent que le bus série est libre si le résultat de l'interrogation donne un état de repos correspondant à l'état logique « 1 », et qui considèrent le bus série comme occupé si le résultat de l'interrogation donne un état actif correspondant à l'état logique « 0 ».

8. Appareil de commande selon la revendication 6 ou 7,
caractérisé en ce qu'
il comporte des moyens choisissant la durée de surveillance de bus (T_{U}) au moins égale à la somme d'une durée d'octet (T_{octet}) et d'une durée d'intervalle d'octet (T_{bmax}), la durée d'octet (T_{Octet}) est égale à la durée d'un octet correspondant à une information composée d'au moins un octet, et la durée interoctet (T_{Bmax}) est la durée maximale qui s'écoule entre deux octets d'une information.

9. Appareil de commande selon l'une des revendications 6 à 8,
caractérisé par
des moyens pour reconnaître une collision d'informations sur le bus série à brancher.
